# EUROPÄISCHE PATENTSCHRIFT

(11) **EP 1 337 151 B1**
(45) Veröffentlichungstag und Bekanntmachung des Hinweises auf die Patenterteilung: **21.07.2004**
(21) Anmeldenummer: 01978416.4
(22) Anmeldetag: 16.10.2001
(51) Int. Cl.: A01N 57/20

(54) **PESTIZIDHALTIGE WÄSSRIGE MITTEL**
AQUEOUS AGENTS CONTAINING PESTICIDES
AGENTS AQUEUX A TENEUR EN PESTICIDES

(30) Priorität: 24.10.2000 DE 10052588
(43) Veröffentlichungstag der Anmeldung: 27.08.2003
(73) Patentinhaber: Cognis Deutchland GmbH & Co. KG, 40589 Düsseldorf (DE)
(72) Erfinder: WOLLENWEBER, Horst-Werner, 40597 Düsseldorf (DE); RATHJENS, Andreas, 40589 Düsseldorf (DE); MAINX, Hans-Georg, 42799 Leichlingen (DE)
(86) Internationale Anmeldenummer: PCT/EP2001/011911
(87) Internationale Veröffentlichungsnummer: WO 2002/034051

(56) Entgegenhaltungen:
- WO-A-96/00010
- WO-A-97/23131

## Beschreibung

### Gebiet der Erfindung

Die Erfindung befindet sich auf dem Gebiet der Agrochemikalien und betrifft spezielle wäßrige Mittel, die Pestizide in Kombination mit Zusätzen enthalten, welche die Pestizidwirkung steigern.

### Stand der Technik

Zum Schutz der wertvollen Kulturpflanzen vor Schädlingsbefall werden in der Landschaft vielfach wäßrige Lösungen oder Emulsionen von Pestizide eingesetzt. Durch Auswahl von geeigneten zusätzlichen Komponenten (Adjuvantien) werden diese Formulierungen auf die Bedürfnisse der Praxis angepaßt. Wegen der potentiellen Gefährdung der Umwelt beim Einsatz von Pestizide besteht ein genereller Bedarf, deren Wirkung durch geeignete Applikationsformen bzw. durch geeignete Formulierung zu steigern. Weiterhin ist es gewünscht, daß derartige Mittel auch über lange Lagerzeiten bei unterschiedlichen Temperaturen stabil bleiben. Demzufolge hat eine Aufgabe der vorliegenden Erfindung darin bestanden, Pflanzenschutzmittel mit festen wie flüssigen, wasserlöslichen wie auch öllöslichen Pestiziden zur Verfügung zu stellen, die sich gleichzeitig durch eine höhere Lagerstabilität und Aktivität (Adjuvantseffekt) auszeichnen und sich dabei insbesondere problemlos mit Wasser verdünnen lassen. Weiterhin und vorzugsweise sollte außerdem die Wirkung der pestiziden Wirkstoffe gesteigert werden, um so deren Einsatzkonzentration zu verringern. Ein bekanntes Pestizid ist das Glyphosat, für das bereits eine Vielzahl von Formulierungsvorschlägen bekannt sind. Hierzu sei auf die WO 97/36493 verwiesen, die wäßrige Glyphosat-haltige Mittel vorschlägt, denen als Adjuvantien polyethoxylierte Alkohole zugegeben werden, um die Phytotoxizität des Wirkstoffs zu verbessern. Aus der WO 00/38523 ist bekannt, Glyphosat in Kombination mit Betainen sowie ggf. ethoxylierte Tenside als "Wetter" einzusetzen, um so die herbizide Wirkung zu steigern. Aus der DE 199 14 295 der Anmelderin ist es bekannt, daß kationisch derivatisierte Alkylglukoside (APG) geeignet sind zusammen mit Pestiziden stabile Emulsionen auszubilden. Ein penetrationssteigernder Effekt wird aber nicht beschrieben. In WO 97/23131 wird ein quaternärisierter APG zur steigerung der wirksamkeit und der Regenbeständigkeit von Glyphosat beschrieben.

Es wurde nun gefunden, das die Kombination von Glyphosat mit ausgewählten Verbindungen aus der Gruppe der derivatisierten Zucker ebenfalls zu einer deutlichen Verbesserung der Pestizidwirkung führt und gleichzeitig stabile wäßrige Mittel hergestellt werden können.

### Beschreibung der Erfindung

Gegenstand der Erfindung sind wässerige Mittel, enthaltend mindestens
(a) Glyphosat und
(b) kationisch derivatisierte Zucker

Es wurde gefunden, daß Mittel, die Glyphosat zusammen mit kationischen derivatisierten Zuckern und gegebenenfalls Adjuvantien enthalten, das Anforderungsprofil in ausgezeichneter Weise erfüllen. Insbesondere zeigen die derivatisierten Zucker eine verbesserte Penetration und Retention des Glyphosats. Die Zubereitungen zeichnen sich durch eine gegenüber konventionellen Emulsionen des Stands der Technik verbesserte Lagerstabilität und höhere Aktivität aus. Sie lassen sich zudem problemlos mit Wasser verdünnen und erlauben ferner auch die nachträgliche Einarbeitung anderer Pestizide.

### Pestizide

Die erfindungsgemäßen Mittel enthalten als wesentlichen Bestandteil Glyphosat. Es handelt sich dabei um N-(Phosphonomethyl)glycin, C₃H₈NO₅P, MG 169,07, Schmelzpunkt 200 °C, LD₅₀ (Ratte oral) 4320 mg/kg (WHO), ein nicht-selektives systemisches Blatt-Herbizid, das vorzugsweise in Form seines Isopropylamin-Salzes zur totalen und semitotalen Bekämpfung von Ungräsem und Unkräutern, einschließlich tiefwurzelnder mehrjähriger Arten, auf allen Ackerbaukulturen, im Obst- u. Weinbau verwendet wird. Die Struktur ist wie folgt:

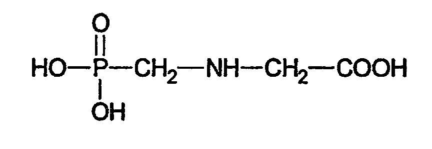

Im Rahmen der vorliegenden Anmeldungen werden unter Glyphosat alle dem Fachmann bekannten Derivate des Glyphosats verstanden, also vorzugsweise dessen Mono- oder Diethanolaminsalze des Glyphosats. Als Kationen kommen weiterhin Natrium oder Kalium in Frage. Besonders bevorzugt ist aber das Isopropylaminsalz des Glyphosats. Weiterhin können auch beliebige Mischungen dieser Verbindungen im Rahmen des erfindungsgemäßen Handelns eingesetzt werden.

Bei den Pestiziden, die weiterhin, als zusätzliche Komponente (a) in Frage kommen, handelt es sich vorzugsweise um öllösliche Substanzen. Es können dabei Fungizide, Herbizide, Insektizide oder deren Gemische zum Einsatz gelangen. Typische Beispiele für geeignete Fungizide sind Azoxystrobin, Benalaxyl, Carbendazim, Chlorothalonil, Cupfer, Cymoxanil, Cyproconazol, Diphenoconazol, Dinocap, Epoxiconazol, Fluazinam, Flusilazol, Flutriafol, Folpel, Fosetyl-Aluminium, Kresoxim-Methyl, Hexaconazol, Mancozeb, Metalaxyl, Metconazol, Myclobutanil, Ofurace, Phentinhydroxid, Prochloraz, Pyremethanil, Soufre, Tebucanazol, und Tetraconazol sowie deren Gemische. Als Herbizide können A-lachlor, Acloniphen, Acetochlor, Amidosulfuron, Aminotriazol, Atrazin, Bentazon, Biphenox, Bromoxyl Octanoate, Bromoxynil, Clethodim, Chlodinafop-Propargyl, Chloridazon, Chlorsulfuron, Chlortoluron, Clomazon, Cycloxydim, Desmedipham, Dicamba, Dicyclofop-Methyl, Dihamstoff, Difluphenicanil, Dimithenamid, Ethofumesat, Fluazifop, Fluazifop-p-butyl, Fluorochloridon, Fluroxypyr, Glufosinat, Glyphosat, Haloxyfop-R, loxynil Octanoate, Isoproturon, Isoxaben, Metamitron, Metazachlor, Metolachlor, Metsulfuron-Methyl, Nicosulfuron, Notflurazon, Oryzalin, Oxadiazon, Oxyfluorphen, Paraquat, Pendimethalin, Phenmedipham, Phenoxyprop-p-Ethyl, Propaquizafop, Prosulfocarb, Quizalofop, Sulcotrion, Sulphosat, Terbutylazin, Triasulfuron, Trichlorpyr, Triflualin und Triflusulforon-Methyl einzeln oder in Abmischung eingesetzt werden. Als Insektzlde kommen schließlich Biphenthrin, Carbofuran, Carbosulfan, Chlorpyriphos-Methyl, Chlorpyriphos-Ethyl, β-Cyfluthrin, λ-Cyhalothrin, Cyhexatin, Cypermethrin, Dicofol, Endosulfan, τ-Fluvalinat, α-Methrin, δ-Methrin, Phenbutatin, Pyrimicarb, Terbuphos und Tebuphenpyrad sowie deren Gemische in Betracht. Weitere geeignete Pestizide können beispielsweise dem Index Phytosanitaire 1998, 34. Aufl. (Hrsg.: Association de Coordination Technique Agricole, Paris) entnommen werden.

### Kationisch modifizierte Zucker

Die kationischen Zuckerderivate (b) werden, wie eingangs schon angedeutet, durch an sich bekannte Derivatisierung von Zuckermoleküien erhalten. Unter Zuckern werden im Rahmen der vorliegenden Anmeldungen allgemein monomere, oligomere oder polymere Kohlenhydrate verstanden. Dabei sind sowohl die Kohlenhydrate als solche, als auch, vorzugsweise ihre reduzierten Formen, und die alkylierten und/oder alkoxylierten Derivate von derartigen Zuckern geeignete Edukte für die Herstellung der erfindungsgemäß eingesetzten kationischen Derivate. Aus diesen Gruppen werden vorzugsweise die reduzierten Zucker, die nicht weiter derivatisiert sind, eingesetzt.

Als Ausgangsprodukt dienen Zucker, ausgewählt aus der Gruppe der Cyclodextrine oder Sorbit. Bei den Cyclodextrinen handelt es sich um bekannte Substanzen, die z.B. beim Abbau von Stärke durch Bacillus macerans oder Bacillus circulans unter Einwirkung von Cyclodextringlycosyltransferase gebildete werden. Die Cyclodextrine bestehen aus 6, 7 oder 8 alpha-1,4-verknüpften Glucose-Einheiten (alpha-, beta- bzw. gamma-Cyclodextrine) Zu weiteren Einzelheiten sei verweisen auf Römpps Lexikon Chemie - elektronische Version 2.0, Stuttgart/New York: Georg Thieme Verlag 1999. Auch Sorbit ist eine bekannte Verbindungen.
Weiterhin dient Sorbit als geeignetes Basis zur Herstellung erfindungsgemäßer kationischer Zuckerderivate. Sorbit hat die Summenformel C₆H₁₄O₆, Molgewicht 182,17. Der nach IUPAC/IUB als D-Glucitol bezeichnete D-Sorbit ist ein zu den Hexiten gehörender 6-wertiger Alkohol (Zuckeralkohol). Zu weiteren Einzelheiten sei auf Römpp Lexikon Chemie - Version 2.0, Stuttgart/New York: Georg Thieme Verlag 1999 unter dem Stichwort "Sorbit" verwiesen.

Vorzugsweise erfolgt die Herstellung durch Umsetzung der primären Hydroxylgruppe der oben genannten Glykoside mit Halogenverbindungen oder Epoxiden, die eine quartäre Ammoniumgruppe aufweisen. Solche Verbindungen folgen der Formel (I)

X-R'-NR₃ ⁺X- (II)

In der Formel (I) steht R' für einen zweiwertigen Alkylrest , mit 2 bis 8 C-Atomen, wobei der Rest auch verzweigt und/oder funktionalisiert sein kann. X bedeutet ein Halogenatom, vorzugsweise Chlor. Vorzugsweise steht R' für eine Gruppe -C₃H₆- oder C₃H₅OH-. Im letzteren Fall ist die Hydroxylgruppe mit dem mittleren C-Atom der Kette verbunden. Die Rest R stehen unabhängig voneinander für Alkylreste mit 1 bis 24 C-Atomen. Besonders bevorzugt sind solche Verbindungen der Formel (I) in der mindestens ein Rest R für einen Alkylrest mit 8 bis 18 C-Atome steht. Besonders bevorzugt sind Verbindungen der Formel (I) in denen ein Rest R einen Alkylrest mit 8 bis 18 C-Atomen bedeutet und die beiden anderen Reste R für Alkylreste mit weniger als 8 C-Atomen stehen, vorzugsweise für einen Alkylrest mit 1 bis 4 C-Atome und ganz besonders bevorzugt einen Methylrest stehen.

Typische Beispiele für geeignete Halogenverbindungen sind 3-Chlor- und 3-Brom-2-hydroxypropyltrialky-ammoniumchloride, die unter der Bezeichnung "Quab®" von der Degussa AG vertrieben werden. Die Umsetzung zwischen Zucker und Halogenverbindung erfolgt in Gegenwart starker Basen wie beispielsweise Natriumhydroxid, Kaliumhydroxid, Natriummethylat oder Kaliumtert-butylat, die sowohl in fester Form als auch als konzentrierte wäßrige Lösung eingesetzt werden können. Die Umsetzung erfolgt typischerweise bei milderen Temperaturen von 30 bis 50 °C und Reaktionszeiten von 12 bis 68 Stunden. Die Reaktionspartner Zucker und Halogenverbindung werden üblicherweise in angenähert äquimolaren Mengen oder aber im Überschuß Quab eingesetzt, wobei mit Hilfe der Base ein pH-Wert im Bereich von 8 bis 11 eingestellt wird. Im Überschuß bedeutet vorzugsweise ein molares Verhältnis monomerer Zucker zu Quab von 1 : 2. Im Falle der Cyclodextrine wird das Quab im 10 bis 20fachen molaren Überschuß eingesetzt.

Vorzugsweise gelangen kationisch derivatisierte Zucker (b) auf Basis von Sorbit oder Cylcodextrinen der Formel **(II)** zum Einsatz. Im Falle von Cyclodextrinen werden Produkte gemäß Formel **(II)** erhalten, 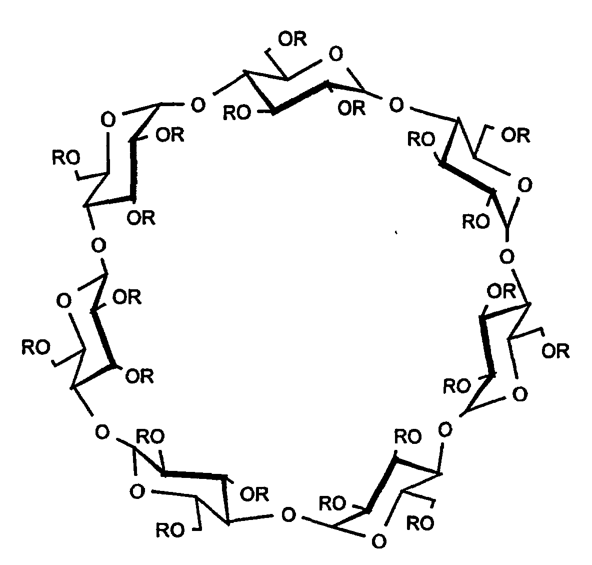 wobei R für ein Wasserstoffatom und/oder einen Rest der folgenden Formel 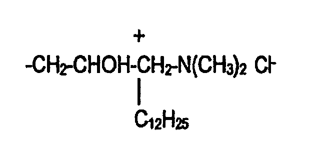 steht. Im Falle von Sorbit als Zuckerquelle werden beispielsweise Verbindungen der Formel (III) erhalten, in der R dieselbe Bedeutung hat wie in Formel (II)

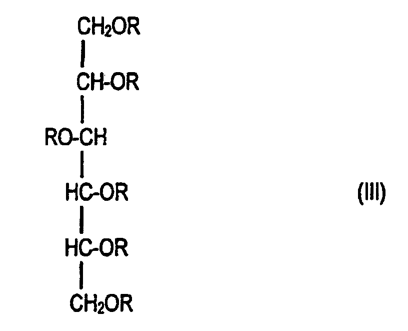

Solche Derivate sind erhältlich durch Umsetzung von Cyclodextrinen oder Sorbit mit Quab® 342 (N,N-Dimethyl-N-dodecylchlorid) in der oben geschilderten Weise. Je nach Reaktionsbedingungen sind nur einzelne oder alle Hydroxylgruppen substituiert. Im Falle des Sorbits wird vorzugsweise die primäre Hydroxylgruppe substituiert, wobei aber auch Isomere gebildet werden, die an den sekundären Hydroxylgruppen substituiert sind. Bei der Umsetzung von Cyclodextrinen mit Quab 342 erfogt nach der Umsetzung ein zusätzlicher Reinigungsschrift, vorzugsweise mittels Dialyse.

### Adjuvantien

In einer bevorzugten Ausführungsform der Erfindung können die Mittel neben den kationischen Zuckerderivaten (b) als fakultative Bestandteile weiterhin Adjuvantien (c) enthalten. Hierfür kommen beispielsweise nichtionogene Tenside aus mindestens einer der folgenden Gruppen in Frage:
(1) Anlagerungsprodukte von 2 bis 120 Mol Ethylenoxid und/ oder 0 bis 75 Mol Propylenoxid an lineare Fettalkohole mit 8 bis 22 C-Atomen, Fettamine, an Fettsäuren mit 8 bis 22 C-Atomen, an Alkylphenole mit 8 bis 15 C-Atomen in der Alkylgruppe und Fettaminen mit 6 bis 22 Kohlenstoffatomen;
(2) C_{12/18}-Fettsäuremono-, -di und -triester von Anlagerungsprodukten von 1 bis 120 Mol Ethylenoxid an Glycerin oder technische Oligoglycerine;
(3) Glycerinmono- und -diester und Sorbitanmono- und -diester von gesättigten und ungesättigten Fettsäuren mit 6 bis 22 Kohlenstoffatomen und deren Ethylenoxidanlagerungsprodukte;
(4) Alkylmono- und -oligoglycoside mit 8 bis 22 Kohlenstoffatomen im Alkylrest und deren ethoxylierte Analoga;
(5) Anlagerungsprodukte von 15 bis 60 Mol Ethylenoxid an Ricinusöl und/oder gehärtetes Ricinusöl;
(6) Polyol- und insbesondere Polyglycerinester wie z.B. Polyglycerinpolyricinoleat oder Polyglycerinpoly-12-hydroxystearat. Ebenfalls geeignet sind Gemische von Verbindungen aus mehreren dieser Substanzklassen;
(7) Anlagerungsprodukte von 2 bis 15 Mol Ethylenoxid an Ricinusöl und/oder gehärtetes Ricinusöl;
(8) Partialester auf Basis linearer, verzweigter, ungesättigter bzw. gesättigter C_{6/22}-Fettsäuren, Ricinolsäure sowie 12-Hydroxystearinsäure und Glycerin, Polyglycerin, Pentaerythrit, Dipentaerythrit, Zuckeralkohole (z.B. Sorbit), Alkylglucoside (z.B. Methylglucosid, Butylglucosid, Laurylglucosid) sowie Polyglucoside (z.B. Cellulose);
(9) Trialkylphosphate sowie Mono-, Di- und/oder Tri-PEG-alkylphosphate;
(10) Wollwachsalkohole;
(11) Polysiloxan-Polyalkyl-Polyether-Copolymere bzw. entsprechende Derivate;
(12) Mischester aus Pentaerythrit, Fettsäuren, Citronensäure und Fettalkohol gemäß DE-PS 1165574 und/oder Mischester von Fettsäuren mit 6 bis 22 Kohlenstoffatomen, Methylglucose und Polyolen, vorzugsweise Glycerin,
(13) Polyalkylenglycole sowie
(14) Glycerincarbonat.

Die Anlagerungsprodukte von Ethylenoxid und/oder von Propylenoxid an Fettalkohole, Fettsäuren, Alkylphenole, Glycerinmono- und -diester sowie Sorbitanmono- und -diester von Fettsäuren oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/oder Propylenoxid und Substrat, mit denen die Anlagerungsreaktion durchgeführt wird, entspricht. C_{12/18}-Fettsäuremono- und -diester von Anlagerungsprodukten von Ethylenoxid an Glycerin sind aus **DE-PS 2024051** als Rückfettungsmittel für kosmetische Zubereitungen bekannt. C_{8/18}-Alkylmono- und -oligoglycoside, ihre Herstellung und ihre Verwendung als oberflächenaktive Stoffe sind beispielsweise aus US 3,839,318, US 3,707,535, US 3,547,828, DE-OS 1943689, DE-OS 2036472 und DE-A1 3001064 sowie EP-A1 0077167 bekannt. Ihre Herstellung erfolgt insbesondere durch Umsetzung von Glucose oder Oligosacchariden mit primären Alkoholen mit 8 bis 18 C-Atomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

### Lösemittel

Insbesondere dann, wenn Pestizide in die Emulsionen eingearbeitet werden sollen, die bei Raumtemperatur Feststoffe darstellen, empfiehlt es sich, unpolare Lösemittel mit zu verwenden. Als weitere fakultative Komponente (d) kommen hierfür beispielsweise Mineralöle, Alkylaromaten und Kohlenwasserstoffe, wie sie z.B. unter der Bezeichnung Solvesso® von der Firma Exxon vertrieben werden, Fettsäureniedrigalkylester, wie z.B. die C₁-C₄-, d.h. die Methyl-, Ethyl-, Propyl- und/oder Butylester von Capronsäure, Caprylsäure, 2-Ethylhexansäure, Caprinsäure, Laurinsäure, Isotridecansäure; Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen in Frage. Des weiteren geeignet sind pflanzliche Triglyceride, wie beispielsweise Kokosöl, Palmöl, Palmkemöl, Sonnenblumenöl, Olivenöl und dergleichen. Auch Polyethylenglykol ist ein geeignetes Lösemittel, vorzugsweise mit Molgewichten im Bereich von 90 bis 600 und vorzugsweise von 120 bis 250.

In einer bevorzugten Ausführungsform enthalten die erfindungsgemäßen Mittel
(a) 0,01 bis 60, vorzugsweise 0,5 bis 55 Gew.-% Pestizide,
(b) 0,05 bis 45, vorzugsweise 1 bis 30 Gew.-% kationisch derivatisierte Zucker
(c) 0 bis 10, vorzugsweise 1 bis 3 Gew.-% Adjuvantien und
(c) 0 bis 40, vorzugsweise 5 bis 30 Gew.-% Lösemittel,
mit der Maßgabe, daß sich die Mengenangaben mit Wasser und gegebenenfalls weiteren üblichen Hilfs- und Zusatzstoffen zu 100 Gew.-% ergänzen. Der Wassergehalt der Mittel liegt bei durchschnittlich 10 bis 90 und insbesondere 30 bis 60 Gew.-%. Die Applikationslösung für den eigentlichen Gebrauch enthält die Komponente (a) in Mengen von 0,01 bis 5 Gew.-%, vorzugsweise 0,1 bis 2,5 Gew.-% und insbesondere 0,1 bis 1,5 Gew.-%. Die Komponente (b) ist in der Applikationslösung enthalten in Mengen von 0,05 bis 5, vorzugsweise 0,5 bis 3 und insbesondere von 0,5 bis 2,0 Gew.-% - alle Angaben bezogen auf die gesamte wäßrige Applikationslösung.

Die erfindungsgemäßen Mittel können aber auch als Konzentrate, beispielsweise mit 10 bis 90 Gew.-% (a), 10 bis 90 Gew.-% (b) und 0 bis 10 Gew.-% (c) bzw. 0 bis 40 Gew.-% (d) vertrieben werden, wobei erst vor der Anwendung die eigentliche Einsatzkonzentration durch Verdünnen eingestellt wird. Der Wassergehalt in solchen Konzentraten liegt zwischen 1 und 30 Gew.-%.

Ein weiterer Gegenstand der Erfindung richtet sich auf die Verwendung der kationisch derivatisierten Zucker (b) als Hilfsmittel in Glyphosat-haltigen wäßrigen Pestizidformulierungen, in denen sie in Mengen von 0,05 bis 45, vorzugsweise 1 bis 30 Gew.-% - bezogen auf die Mittel - enthalten sein können. Es wurde beobachtet, daß die Kombination von Glyphosat mit den kationisch modifizierten Zuckern (b) überraschenderweise die Wirkung der Pestizide erhöht. Hier ist insbesondere eine bessere Penetration der Wirkstoffe (a) in die Pflanzenoberfläche zu beobachten. Damit lassen sich aber die Einsatzkonzentrationen der Pestizide (a) verringern und somit die negativen Auswirkungen des Einsatzes solcher Pestizide auf die Umwelt wirksam reduzieren. Weiterhin verbessert sich die Retention des Pestizids auf der Blattoberfläche. Ein zusätzlicher Gegenstand der vorliegenden Anmeldung ist daher auf die Verwendung von kationisch modifizierten Zuckern (b) zur Wirkungsverstärkung von Glyphosat gerichtet. Ein letzter Gegenstand betrifft ein Verfahren zur Bekämpfung von unerwünschtem Pflanzenwachstum, wobei wäßrige Mittel gemäß der obigen Beschreibung auf die unerwünschten Pflanzen aufgebracht werden. Dabei werden typischerweise Auftragsmengen von 50 bis 600 g Glyphosat (Aktivsubstanz), vorzugsweise 100 bis 350 g pro Hektar eingestellt. Die Applikation erfolgt dabei nach allen, dem Fachmann bekannten Verfahren, insbesondere aber durch Sprühen.

### Beispiele

### A Herstellung von kationisch derivatisierten Zuckern

### A.1 Herstellung von kationisch derivatisiertem Sorbit

### Ansatz:

| | | | |
|---|---|---|---|
| 1. | 160 g | Natronlauge 50% ig | = 2 mol |
| 2. | 100 g | dest. Wasser | |
| 3. | 182 g | Sorbit (Karion Pulver p300) | = 1 mol |
| 4. | 1710 g | Quab 342 40% ig (Degussa) | = 2 mol |
| 5. | ca. 40 ml | Salzsäure 37% ig | |
| 6. | 2000 ml | Methanol | |

### Ausführung:

**1.** und **2.** werden vorgelegt und mit **3.** verrührt, Ansatz auf 60°C erwärmt; tropfenweise Zugabe von **4.** innerhalb von 1h; 4h bei 60°C nachgerührt. Anschließend wurde der Ansatz durch Zugabe von **5.** neutralisiert und gefriergetrocknet, dann das Rohprodukt in 6. aufgenommen; ungelösten Feststoff abgetrennt und Filtrat bei ca. 40°C eingeengt und gefriergetrocknet; Es wurden 880g Produkt erhalten.

### A.2 Herstellung von kationisch derivatisiertem Cyclodextrin

### Ansatz:

| | | | |
|---|---|---|---|
| 1. | 112,0g | Natronlauge 50% ig | = 1,4 mol |
| 2. | 120,0 g | dest. Wasser | |
| 3. | 113,5g | ß-Cyclodextrin | = 0,1 mol |
| 4. | 1197 g | Quab 342 40% ig (Degussa) | = 1,4 mol |
| 5. | 10 g | Salzsäure 37% ig | |

**1., 2.** und **3.** werden vorgelegt und bei ca. 40°C unter rühren gelöst; Ansatz auf 60°C erwärmt; tropfenweise Zugabe von **4.** innerhalb von 3h. Anschließend wurden 24h bei 60°C nachgerührt. Der Ansatz wurde durch Zugabe von **5.** neutralisiert und anschließend wurde das Rohprodukt in einem Dialyseschlauch MWCO 1000 dialysiert. Der Dialyse-Rückstand wurde am Rotavapor eingeengt und anschließend gefriergetrocknet. Ausbeute 77g.

### B Anwendungstechnische Prüfung

Zur Prüfung der penetrationssteigemden Wirkung für Glyphosat der beanspruchten Verbindungen wurden die folgenden Versuche durchgeführt:

Die Applikationslösungen wurden einen Tag vor der Behandlung mit destilliertem Wasser angesetzt. Die Herstellung der Glyphosat-Spritzlösungen erfolgte sowohl mit unmarkiertem Glyphosat (Glyphosatgehalt 97,5 %, Dr. Ehrenstorfer GmbH, Augsburg, Deutschland), als auch mit (¹⁴C)-Glyphosat ([N-(phosphono-(¹⁴C)-methyl)glycin], spezifische Aktivität 2,04 GBq/mmol, radiochemische Reinheit 98,1 %, Amersham Pharmacia Biotech Europe GmbH, Freiburg, Deutschland). Der unmarkierte Wirkstoff wurde mit markiertem versetzt und in Wasser gelöst, so daß in der Applikationslösung eine Glyphosatkonzentration von 0,7 % und eine Radioaktivität von 1,85 kBq/µl enthalten war.

Die zugesetzten Tenside sind in Tabelle 1 aufgeführt:

**Tabelle 1**

| **Bezeichnung** | **Beschreibung** | **Abkürzung in Fig. 1** |
|---|---|---|
| V1 | kationisch derivatisiertes APG gemäß DE 19914295 (Kokosalkyloligoglycosid umgesetzt mit Quab® 151) | RHO-UL |
| V2 | nichtderivabsiertes APG (Kokosalkyloligoglycosid) | Zucker von RHO-UL |
| V3 | Quab® 151 | Reagenz von RHO-UL |
| V4 | Sorbit | Zucker von 33-3 |
| V5 | Quab® 342 | Reagenz von 33-3 |
| E1 | mit Quab ® 342 kationisch derivatisiertes Sorbit | 33-3 |

Die Tensidkonzentration in den Anwendungslösungen betrug 0,1 %. Eine Applikationslösung mit Roundup Ultra (36% Glyphosat, Monsanto Düsseldorf, Deutschland), der (¹⁴C)-Glyphosat zugesetzt wurde, diente als Referenz.

### Messung der Cuticulapenetration

Die cuticuläre Penetration von Glyphosat wurde unter Einsatz eines ,finite dose'-Diffusionssystems in Anlehnung an die Methode von OHKOUCHI, BUKOVAC und NOGA (1998) ermittelt. Hierzu wurde die isolierte Cuticula zwischen zwei Plastikringen eingespannt, auf Dichte überprüft und anschließend mit der morhpologischen Cuticula-Oberseite zur Umgebungsluft orientiert auf die 'finite-dose'-Diffusionsküvette positioniert. Ein Volumen von 3,0 ml deionisiertem Wasser diente in der Diffusionszelle als 'Receiver'-Lösung. In der 'Receiver'-Zelle verhinderte ein Magnetrührer die Entstehung von Grenzschichteffekten.
Drei einzelne 1µl-Tropfen der wirkstoffhaltigen Lösungen wurden unter Zusatz der zu prüfenden Tenside mit einer Mikroliterspritze (s.Kap. 1.1.1) auf die physiologische Cuticula-Oberseite appliziert. Die Bestimmung der Glyphosatkonzentration in der mit der Cuticula-Innenseite in direktem Kontakt stehenden 'Receiver'-Lösung erfolgte nach 24, 48, 72 und 144 h, bzw. nach 6, 24 und 48 h. Zu diesen Zeitpunkten wurden mit einer Eppendorf-Pipette 500 µl aus der 'Receiver'-Lösung entnommen und mit 10 ml Szintillationscocktail versetzt. Anschließend wurden die Küvetten wieder mit destilliertem Wasser aufgefüllt.

Die Messung der Radioaktivität in flüssigen Proben erfolgte im Flüssigkeits-Szintillationsspektrometer (LSC 2500TR, Fa. Canberra-Packard) mit Quenchkorrektur über proben- und szintillationspezifische Eichreihen. Im Versuch wurde jede Flüssigkeitsprobe mit 10 ml Instant Szintillator-Gel (Fa. Canberra-Packard) versetzt und im LSC gemessen. Zur Backgroundkorrektur wurde dem entsprechenden inaktiven Lösungsmittel der Szintillationscocktail zugesetzt. Die Radioaktivitätswerte einer Meßreihe konnten dann automatisch um diesen Wert korrigiert werden. Alle Proben wurden in Abhängigkeit von der Höhe der Radioaktivität bis zu 15 Minuten gezählt. Die Berechnung der Ergebnisse erfolgte in Prozent der applizierten Radioaktivität.

### Ergebnisse

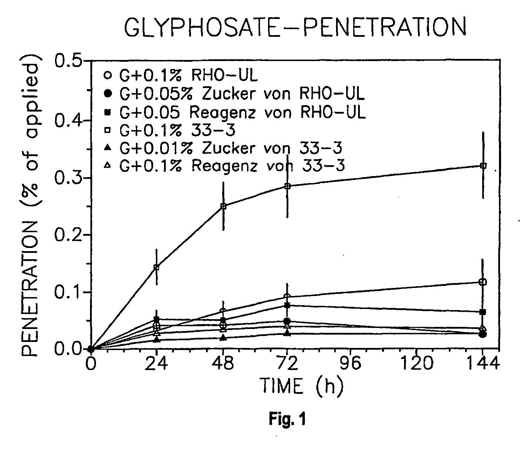

In Figur 1 sind die Ergebnisse der Penetrationstests aufgeführt. Es wird deutlich, daß Glyphosat in Kombination mit dem erfindungsgemäßen, kationisch derivatisierte Sorbitan eine unerwartet bessere Penetration aufweist als ohne Adjuvants bzw. in Gegenwart einzelnen Zucker. Auch im Vergleich mit der Lehre der DE 19914295 zeigt sich überraschenderweise eine verbesserte Penetration des Wirkstoffs. Die Abkürzung G in Figur 1 steht für Glyphosat.

## Patentansprüche

1. Wässerige Mittel, enthaltend mindestens
(a) Glyphosat und
(b) kationisch derivatisiertes Sorbit und/oder kationisch derivatisierte Cyclodextrine.

2. Mittel nach Anspruch 1, **dadurch gekennzeichnet, dass** die Komponente (b) erhalten wird indem man Sorbit oder Cyclodextrine mit Verbindungen der Formel (I)
X-R'-NR₃ ⁺X⁻ (I)
umsetzte, wobei in dieser Formel R' für einen zweiwertigen Alkylrest mit 2 bis 8 C-Atomen, wobei der Rest auch verzweigt oder funktionalisiert sein kann, steht und die Reste R unabhängig voneinander für Alkylreste mit 1 bis 24 C-Atomen stehen und X für ein Halogenatom steht.

3. Mittel nach Anspruch 2, **dadurch gekennzeichnet, dass** mindestens einer der Reste R in Formel (I) für einen Alkylrest mit 8 bis 18 C-Atomen steht.

4. Mittel nach Anspruch 1 bis 3 **dadurch gekennzeichnet, dass** die Komponente (b) hergestellt wird durch Umsetzung von Cyclodextrinen oder Sorbit mit 3-Chlor-2Hydroxypropyl-N,N-Dimethyl-N-dodecylchlorid.

5. Mittel nach mindestens einem der Ansprüche 1 bis 4 **dadurch gekennzeichnet, dass** sie weiterhin als fakultative Komponente (c) Adjuvantien enthalten.

6. Mittel nach Anspruch 5 **dadurch gekennzeichnet, dass** sie als Komponente (c) Adjuvantien enthalten, die ausgewählt sind aus der Gruppe, die gebildet wird von Anlagerungsprodukten von 2 bis 120 Mol Ethylenoxid und/ oder 0 bis 75 Mol Propylenoxid an lineare Fettalkohole mit 8 bis 22 C-Atomen, an Fettsäuren mit 8 bis 22 C-Atomen und an Alkylphenole mit 8 bis 15 C-Atomen in der Alkylgruppe; Fettamine mit 6 bis 22 Kohlenstoffatomen C_{12/18}-Fettsäuremono-, -di-, triestem von Anlagerungsprodukten von 1 bis 120 Mol Ethylenoxid an Glycerin oder Oligoglycerine; Glycerinmono- und -diestem und Sorbitanmono- und -diester von gesättigten und ungesättigten Fettsäuren mit 6 bis 22 Kohlenstoffatomen und deren Ethylenoxidanlagerungsprodukten; Alkylmono- und -oligoglycosiden mit 8 bis 22 Kohlenstoffatomen im Alkylrest und deren ethoxylierte Analoga; Anlagerungsprodukten von 15 bis 60 Mol Ethylenoxid an Ricinusöl und/oder gehärtetes Ricinusöl; Polyolestern; Anlagerungsprodukten von 2 bis 15 Mol Ethylenoxid an Ricinusöl und/oder gehärtetes Ricinusöl; Partialestem auf Basis linearer, verzweigter, ungesättigter bzw. gesättigter C_{6/22}-Fettsäuren, Ricinolsäure sowie 12-Hydroxystearinsäure und Glycerin, Polyglycerin, Pentaerythrit, Dipentaerythrit, Zuckeralkoholen; Alkylgtucosiden; Trialkylphosphaten sowie Mono-, Di- und/oder Tri-PEG-alkylphosphaten; Wollwachsalkoholen; Polysiloxan-Polyalkyl-Polyether-Copolymeren bzw. entsprechenden Derivaten; Mischestem aus Pentaerythrit. Fettsäuren, Citronensäure und Fettalkohol und/oder Mischestem von Fettsäuren mit 6 bis 22 Kohlenstoffatomen, Methylglucose und Polyolen; Polyalkylenglycolen sowie Glycerincarbonat,

7. Mittel nach mindestens einem der Ansprüche 1 bis 6 **dadurch gekennzeichnet, dass** sie weiterhin als fakultative Komponente (d) Lösemittel enthalten.

8. Mittel nach Anspruch 7 **dadurch gekennzeichnet, dass** sie als Komponente (d) Mineralöl, Alkylaromaten, Fettsäureniedrigalkylester und/oder pflanzliche Triglyceride enthalten.

9. Mittel nach einem der Ansprüche 1 bis 8 **dadurch gekennzeichnet, dass** sie
(a) 0,01 bis 60 Gew.-% Pestizide
(b) 0,05 bis 45 Gew.-% kationisch derivatisierte Zucker gemäß Anspruch 1,
(c) 0 bis 10 Gew.-% nichtionische Co-Emulgatoren und
(d) 0 bis 40 Gew.-% Lösemittel
mit der Maßgabe enthalten, dass sich die Mengenangaben mit Wasser und gegebenenfalls weiteren üblichen Hilfs- und Zusatzstoffen zu 100 Gew.-% ergänzen.

10. Verwendung von kationisch derivatisierten Zuckern (b) gemäß Anspruch 1 als Wirkungsverstärker in wässerigen, glyphosathaltigen Mitteln.

11. Verfahren zur Bekämpfung unerwünschten Pflanzenwachstums, **dadurch gekennzeichnet, dass** ein wäßriges Mittel gemäß Anspruch 1 auf die Pflanzen aufgebracht wird.

## Claims

1. Water-based compositions containing at least
(a) glyphosate and
(b) cationically derivatized sorbitol and/or cationically derivatized cyclodextrins.

2. Compositions as claimed in claim 1, **characterized in that** component (b) is obtained by reacting sorbitol or cyclodextrins with compounds corresponding to formula (I):
X-R'-NR₃⁺ X⁻ (I)
where R' is a difunctional alkyl group containing 2 to 8 carbon atoms which may even be branched or functionalized and the substituents R independently of one another are C₁₋₂₄ alkyl groups and X is a halogen atom.

3. Compositions as claimed in claim 2, **characterized in that** at least one of the substituents R in formula (I) is a C₈₋₁₈ alkyl group.

4. Compositions as claimed in claims 1 to 3, **characterized in that** component (b) is obtained by reaction of cyclodextrins or sorbitol with 3-chloro-2-hydroxypropyl-N,N-dimethyl-N-dodecyl chloride.

5. Compositions as claimed in at least one of claims 1 to 4, **characterized in that** they additionally contain adjuvants as an optional component (c).

6. Compositions as claimed in claim 5, **characterized in that** they contain as component (c) adjuvants selected from the group consisting of products of the addition of 2 to 120 mol ethylene oxide and/or 0 to 75 mol propylene oxide onto linear fatty alcohols containing 8 to 22 carbon atoms, fatty amines, onto fatty acids containing 8 to 22 carbon atoms and onto alkylphenols containing 8 to 15 carbon atoms in the alkyl group; C₆₋₂₂ fatty amines; C_{12/18} fatty acid monoesters, diesters and triesters of products of the addition of 1 to 120 mol ethylene oxide onto glycerol or oligoglycerols; glycerol monoesters and diesters and sorbitan monoesters and diesters of saturated and unsaturated fatty acids containing 6 to 22 carbon atoms and ethylene oxide adducts thereof; alkyl mono- and oligoglycosides containing 8 to 22 carbon atoms in the alkyl group and ethoxylated analogs thereof; products of the addition of 15 to 60 mol ethylene oxide onto castor oil and/or hydrogenated castor oil; polyol esters; products of the addition of 2 to 15 mol ethylene oxide onto castor oil and/or hydrogenated castor oil; partial esters based on linear, branched, unsaturated or saturated C_{6/22} fatty acids, ricinoleic acid and 12-hydroxystearic acid and glycerol, polyglycerol, pentaerythritol, dipentaerythritol, sugar alcohols; alkyl glucosides; trialkyl phosphates and mono-, di- and/or tri-PEG-alkyl phosphates; wool wax alcohols; polysiloxane/polyalkyl polyether copolymers and corresponding derivatives; mixed esters of pentaerythritol, fatty acids, citric acid and fatty alcohol and/or mixed esters of fatty acids containing 6 to 22 carbon atoms, methyl glucose and polyols; polyalkylene glycols and glycerol carbonate.

7. Compositions as claimed in at least one of claims 1 to 6, **characterized in that** they additionally contain solvents as an optional component (d).

8. Compositions as claimed in claim 7, **characterized in that** they contain mineral oil, aromatic alkyl compounds, fatty acid lower alkyl esters and/or vegetable triglycerides as component (d).

9. Compositions as claimed in any of claims 1 to 8, **characterized in that** they contain
(a) 0.01 to 60% by weight pesticides,
(b) 0.05 to 45% by weight cationically derivatized sugars according to claim 1,
(c) 0 to 10% by weight adjuvants and
(d) 0 to 40% by weight solvents,
with the proviso that the quantities shown add up to 100% by weight with water and optionally other typical auxiliaries and additives.

10. The use of the cationically derivatized sugars (b) according to claim 1 as performance enhancers in water-based glyphosate-containing compositions.

11. A process for controlling unwanted plant growth, **characterized in that** the water-based composition claimed in claim 1 is applied to the plants.

## Revendications

1. Compositions aqueuses contenant au moins
a) du glyphosate et
b) du sorbitol transformé en dérivé cationique et/ou des cyclodextrines transformées en dérivés cationiques.

2. Compositions selon la revendication 1, **caractérisées en ce qu'** on obtient le composant b) en faisant réagir du sorbitol ou des cyclodextrines avec des composés de formule (I)
X-R'-NR₃ ⁺X⁻ (I)
dans laquelle R' représente un reste alkyle bivalent ayant de 2 à 8 atomes de carbone, pouvant aussi être ramifié ou fonctionnalisé, les restes R représentent indépendamment les uns des autres des restes alkyle ayant de 1 à 24 atomes de carbone et X représente un atome d'halogène.

3. Compositions selon la revendication 2, **caractérisées en ce qu'** au moins un des restes R dans la formule (I) représente un reste alkyle ayant de 8 à 18 atomes de carbone.

4. Compositions selon les revendications 1 à 3, **caractérisées en ce qu'** on produit le composant b) par réaction de cyclodextrines ou de sorbitol avec le chlorure de 3-chloro-2-hydroxypropyl-N,N-diméthyl-N-dodécyle.

5. Compositions selon au moins l'une des revendications 1 à 4, **caractérisées en ce qu'** elles renferment en outre en tant que composant facultatif c) des adjuvants.

6. Compositions selon la revendication 5, **caractérisées en ce qu'** elles renferment en tant que composant c) des adjuvants choisis dans le groupe formé des produits d'addition de 2 à 120 moles d'oxyde d'éthylène et/ou de 0 à 75 moles d'oxyde de propylène sur des alcools gras linéaires ayant de 8 à 22 atomes de carbone sur des acides gras ayant de 8 à 22 atomes de carbone, et sur des alkylphénols ayant de 8 à 15 atomes de carbone dans le groupe alkyle ; des amines grasses ayant de 6 à 22 atomes de carbone ; des mono-, des di- et des triesters d'acides gras en C₁₂-C₁₈ de produits d'addition de 1 à 120 mol. d'oxyde d'éthylène sur du glycérol ou des oligoglycérols ; des mono- et diesters de glycérol et des mono- et diesters de sorbitane avec des acides gras saturés et non saturés ayant de 6 à 22 atomes de carbone et de leurs produits d'addition d'oxyde d'éthylène ; des alkylmono- et oligoglycosides ayant de 8 à 22 atomes de carbone dans le reste alkyle, et leurs analogues éthoxylés ; des produits d'addition de 15 à 60 mol. d'oxyde d'éthylène sur l'huile de ricin et/ou de l'huile de ricin durcie ; des esters de polyol ; des produits d'addition de 2 à 15 mol. d'oxyde d'éthylène sur de l'huile de ricin et/ou de l'huile de ricin durcie ; des esters partiels à base d'acides gras en C₆-C₂₂, linéaires, ramifiés, non saturés ou saturés, de l'acide ricinoléique ainsi que l'acide 12-hydroxystéarique et du glycérol, du polyglycérol, du pentaérythritol, du dipentaérythritol des alcools de sucre ; des alkylglucosides ; des phosphates de trialkyle ainsi que des phosphates de mono-, di- ou tri-PEG-alkyle ; des alcools de cire de laine ; des copolymères polysiloxane-polyalkyl-polyéther ou les dérivés correspondants ; des esters mixtes à base de pentaérythritol, d'acides gras, d'acide citrique, et d'alcool gras et/ou des esters mixtes d'acide gras ayant de 6 à 22 atomes de carbone, du méthylglucose et des polyols ; des polyalkylèneglycols ainsi que le carbonate de glycérol.

7. Compositions selon au moins l'une des revendications 1 à 6, **caractérisées en ce qu'**elles renferment en outre comme composant facultatif d) un solvant.

8. Compositions selon la revendication 7, **caractérisées en ce qu'**elles renferment comme composant d) de l'huile minérale, des produits aromatiques alkylés, des esters d'alkyle inférieur d'acide gras et/ou des triglycérides végétaux.

9. Compositions selon l'une des revendications 1 à 8, **caractérisées en ce qu'**elles renferment de 0,01 à 60 % en poids de pesticide,
a) de 0,05 à 45 % en poids de sucre transformé en dérivé cationique conformément à la revendication 1,
b) de 0 à 10 % en poids d'agents co-émulsionnants non ioniques et
c) de 0 à 40 % en poids de solvant
avec la précision que les données en quantités se complètent avec de l'eau et éventuellement d'autres adjuvants et additifs usuels à 100 % en poids.

10. Utilisation de sucres b) transformés en dérivés cationiques conformément à la revendication 1, en tant que renforçateur d'action dans des compositions aqueuses contenant du glyphosate.

11. Procédé de lutte contre la croissance de plantes indésirables, **caractérisé en ce qu'** on applique une composition aqueuse conformément à la revendication 1 sur les plantes.
